# EUROPÄISCHE PATENTANMELDUNG

(11) **EP 0 978 774 A1**
(43) Veröffentlichungstag der Anmeldung: **09.02.2000**
(21) Anmeldenummer: 99115607.6
(22) Anmeldetag: 06.08.1999
(51) Int. Cl.: G05B 19/10

(54) **Verfahren und Vorrichtung zum Bedienen eines programmgesteuerten Haushaltsgerät**

(30) Priorität: 07.08.1998 DE 19835926
(71) Anmelder: BSH Bosch und Siemens Hausgeräte GmbH, 81669 München (DE)
(72) Erfinder: Wilsdorf, Gerd, 82140 Olching (DE)

(57) **Zusammenfassung**

Ein programmgesteuertes Haushaltgerät 1 weist eine Bedienvorrichtung 2 mit zahlreichen Bedienelementen 3 bis 9 auf, die zeitlich aufeinander folgend betätigt werden und mit denen beispielsweise das Haushaltgerät 1 eingeschaltet, das Betriebsprogramm eingestellt und schließlich gestartet wird. Um die Bedienbarkeit des Haushaltgeräts zu verbessern, sind den Bedienelementen 3 bis 9 Signalelemente 10 bis 16 zugeordnet, die einen Hinweis auf das jeweils als nächstes zu betätigende Bedienelement 3 bis 9 geben und gegebenenfalls auch signalisieren, ob die zugeordneten Bedienelemente 3 bis 9 auf zulässige beziehungsweise korrekte Weise betätigt oder eingestellt wurden. Auf diese Weise wird eine Führung der Bedienperson durch den Bedienvorgang und insbesondere bei der unter Umständen komplizierten Einstellung des Betriebsprogramms erreicht, die die Bedienung von programmgesteuerten Haushaltgeräten wesentlich erleichtert.

## Beschreibung

Die Erfindung betrifft ein Verfahren zum Bedienen eines programmgesteuerten Haushaltgeräts mit Bedienelementen, die während des Bedienvorgangs einzeln oder als eine Gruppe von Bedienelementen zeitlich aufeinander folgend betätigt werden, sowie eine Bedienvorrichtung zur Durchführung des Verfahrens.

Ein solches Verfahren ist durch die DE 28 49 417 A1 bekannt. Derartige programmgesteuerte Haushaltgeräte weisen in der Regel zahlreiche Bedienelemente auf, die während des Bedienvorgangs betätigt werden. Insbesondere zum Auswählen des Betriebsprogramms und dessen Parametern müssen mit zahlreichen Wahlschaltern Einstellungen vorgenommen werden. Die Betätigung der Bedienelemente kann abhängig von der damit vorzunehmenden Einstellung zwingend erforderlich oder auch freigestellt sein. Auch kann es sich ergeben, daß innerhalb einer Gruppe von Bedienelementen nicht alle, sondern nur eines oder einige betätigt werden müssen. Im Fall einer Wäschebehandlungsmaschine ist beispielsweise die Wahl des Betriebsprogramms (zum Beispiel zum Waschen von Kochwäsche, Buntwäsche oder Wolle), der Wäschebehandlungstemperatur und der Schleuderdrehzahl beziehungsweise, ob oder auf welche Art die Wäsche geschleudert werden soll, zwingend erforderlich, wohingegen die Aktivierung einer oder mehrerer Zusatzfunktionen (zum Beispiel eine zeitliche Verkürzung des Waschvorgangs, das Waschen mit erhöhter Wassermenge, das vorherige Einweichen der Wäsche oder das Vorschalten einer Vorwäsche) optional ist.

Ferner sind in der Regel noch Bedienelemente beispielsweise zum Einschalten des Geräts, zum Starten des gewählten Betriebsprogramms oder zum Aktivieren verschiedener Betriebszusatzfunktionen vorhanden, wie beispielsweise das Öffnen der Fülltür bei einer Wäschebehandlungsmaschine.

Dabei ist die zeitliche Reihenfolge, in der die Bedienelemente einzeln oder gruppenweise betätigt werden, in der Regel festgelegt oder ergibt sich aus den vorgenommenen Einstellungen oder anderen Umständen beziehungsweise wird von ihnen nahegelegt. So wird üblicherweise das Gerät zunächst mit einem Hauptschalter eingeschaltet und anschließend das Betriebsprogramm eingestellt und gestartet.

Daneben kann auch im Verlauf des Betriebs die Vornahme weiterer Bedienvorgänge mittels entsprechender Bedienelemente erforderlich sein. Im Fall einer Wäschebehandlungsmaschine kann dies beispielsweise das Öffnen der Waschmittelschublade zum Einfüllen des Waschmittels oder das Entriegeln der Fülltür nach dem Waschvorgang sein, um die Wäsche zu entnehmen.

Aufgrund der hohen Anzahl der in programmgesteuerten Haushaltgeräten implementierten Funktionen und damit der vorzunehmenden Einstellungen oder Betätigungen von Bedienelementen kann die Bedienung derartiger Haushaltgeräte in den Fällen der bekannten Ausführungen sehr kompliziert sein, zumal dabei in der Regel auch die korrekte Reihenfolge beachtet werden muß. Hinzu kommt, daß Haushaltgeräte in dem meisten Fällen von technischen Laien bedient werden.

Durch die fortschreitende technische Entwicklung der Haushaltgeräte und die Tatsache, daß diese Geräte zunehmend mit programmgesteuerter Mikroprozessor- beziehungsweise Mikrocontrollertechnik ausgerüstet sind, die bei gleichbleibendem Bauteileaufwand nur durch Erweiterung des Steuerungsprogramms eine Implementierung weiterer Betriebsprogramme ermöglicht, wird der Funktionsumfang der Geräte auch in Zukunft weiter zunehmen und damit auch der Aufwand für den Benutzer, diese Geräte zu bedienen. Die benutzerfreundliche Bedienbarkeit eines Haushaltgeräts ist somit ein entscheidendes Merkmal.

Der Erfindung liegt die Aufgabe zugrunde, ein Verfahren sowie eine Vorrichtung der eingangs genannten Art für die Bedienung eines programmgesteuerten Haushaltgeräts zu schaffen, bei denen eine unkomplizierte, einfache und schnelle Bedienung möglich ist und die Gefahr von Fehlbedienungen verringert wird.

Erfindungsgemäß wird diese Aufgabe durch ein Verfahren gelöst, bei dem während des Bedienvorgangs das als nächstes zu betätigende Bedienelement oder die als nächstes zu betätigende Bedienelementgruppe durch wenigstens ein zugeordnetes Signalelement signalisiert wird, beziehungsweise durch eine Bedienvorrichtung zur Durchführung dieses Verfahrens, bei der wenigstens einem Bedienelement wenigstens ein Signalelement zugeordnet ist, das zum Signalisieren des als nächstes zu betätigenden Bedienelements oder der als nächstes zu betätigenden Bedienelementgruppe dient.

Dabei können die Bedienelemente in einer bestimmten Reihenfolge einzeln nacheinander betätigt werden oder als eine Gruppe, wenn beispielsweise von mehreren Bedienelementen nicht alle betätigt werden müssen, da die entsprechenden Einstellungen optional sind.

Durch die erfindungsgemäße Lösung wird erreicht, daß die Bedienperson einen Hinweis erhält, welches Bedienelement als nächstes zu betätigen ist beziehungsweise ob und bei welchem Bedienelement noch Einstellungsbedarf besteht. Dies ist insbesondere dann von Vorteil, wenn das Haushaltgerät über viele Bedienelemente verfügt, die betätigt werden müssen. Bei dieser Art der Benutzerführung können auch die Fälle berücksichtigt werden, in denen sich abhängig von bereits vorgenommenen Einstellungen die weitere Einstellfolge verändert und beispielsweise manche Bedienelemente oder Einstellelemente nicht mehr betätigt werden müssen oder dürfen. Die Bedienung wird auch schneller, da für den folgenden Bedienschritt nicht mehr die Hinweise zu sämtlichen Bedienelementen abgelesen werden müssen, um das richtige Bedienelement zu finden, sondern nur der Signalisierung gefolgt werden muß. Auch die Gefahr, die Betätigung eines Bedienelements zu übersehen oder ein falsches Bedienelement zu betätigen, ist damit wesentlich geringer, so daß Bedienungsfehler nahezu ausgeschlossen sind. Bereits dem Hauptschalter zum Einschalten des Geräts kann ein Signalelement zugeordnet sein, das bei ausgeschaltetem Gerät ein Signal abgibt. Auf diese Weise wird die Bedienperson unmißverständlich darauf hingewiesen, wie und bei welchem Bedienelement der Bedienvorgang zu beginnen ist. Im Fall einer Wäschebehandlungsmaschine kann auch der Einfüllöffnung für das Waschmittel ein Signalelement zugeordnet sein, das insbesondere vor dem Starten des Waschvorgangs ein Signal abgibt, falls sich kein, zuwenig oder das falsche Waschmittel in der Wäschbehandlungsmaschine befindet, um die Bedienperson auf diesen Mangel hinzuweisen.

Die Bedienelemente, die als Gruppe betätigt werden, können abhängig von Einstellungen bestimmt werden, die mit den zuvor betätigten Bedienelementen vorgenommenen wurden. Dazu können entsprechend der bereits vorgenommenen Einstellungen die Bedienelemente zu einer Gruppe zusammengefaßt werden, aus der eines oder mehrere Bedienelemente betätigt werden müssen oder können, wobei in einem solchen Fall die Signalelemente sämtlicher Bedienelemente dieser Gruppe ein Signal abgeben können. Bei einer Wäschebehandlungsmaschine beispielsweise können Funktionen wie die zeitliche Verkürzung des Waschvorgangs, das Vorschalten einer Vorwäsche oder das Waschen mit erhöhter Wassermenge optional ausgewählt werden, wobei beispielsweise bei einer niedrigen Waschtemperatur sich eine zusätzliche Verringerung der Reinigungswirkung durch die zeitliche Verkürzung des Waschvorgangs nicht empfiehlt. Um dies zu berücksichtigen, kann bei erfolgter Einstellung einer niedrigen Temperatur das Bedienelement zur Auswahl der zeitlichen Verkürzung aus der Gruppe der zu betätigenden Bedienelemente ausgeschlossen werden, so daß das zugeordnete Signalelement nicht aktiviert wird. Falls sich bestimmte optionale Funktionen in einer Gruppe gegenseitig ausschließen, kann bei Auswahl einer dieser Funktionen das Bedienelement für die davon ausgeschlossene Funktion aus der Gruppe ausgeschlossen und das zugeordnete Signalelement inaktiv sein.

Zusätzlich können die Signalelemente signalisieren, ob die zugeordneten Bedienelemente auf zulässige beziehungsweise korrekte Weise betätigt beziehungsweise eingestellt wurden. Dazu können beispielsweise die Signalelemente auch nach Betätigung des zugeordneten Bedienelements aktiviert bleiben und weiterhin Einstellungs- beziehungsweise Betätigungsbedarf signalisieren, so daß kein Hinweis auf das nächste Bedienelement in der Bedienfolge erfolgt. Auch können die Signalelemente eine fehlerhafte Betätigung oder Einstellung durch Abgabe eines speziellen Fehlersignals anzeigen. Beispielsweise können mehrfarbige Lichtquellen als Signalelemente eingesetzt werden, die zum Signalisieren eines Betätigungsbedarfs in einer bestimmten Farbe leuchten und nach inkorrekter Betätigung des zugeordneten Bedienelements in einer anderen Farbe weiterleuchten.

In einer möglichen Ausführungsform werden nur die Betätigungen der Bedienelemente berücksichtigt, deren zugeordnete Signalelemente Signale abgeben. Dieses Verfahren kann insbesondere im Fall von Einstellelementen eingesetzt werden, mit denen verschiedene Einstellmöglichkeiten in einer zugeordneten elektronischen Steuereinrichtung weitergeschaltet werden, da diese auf einfache Weise derart geschaltet oder programmiert werden können, daß nur die Betätigungen von Bedienelementen, deren zugeordnete Signalelemente ein Signal abgeben beziehungsweise Eingabebereitschaft signalisieren, ein Weiterschalten der Einstellungsmöglichkeiten und damit eine Veränderung der Einstellung bewirken.

Eine Fehlbedienung kann auf diese Weise sicher vermieden werden, da wirksame Einstellungen oder Betätigungen nur bei den im entsprechenden Augenblick dafür vorgesehenen und von den zugeordneten Signalelementen angezeigten Bedienelementen zugelassen werden und somit die korrekte Bedienfolge von der Bedienperson auch irrtümlicherweise nicht verlassen werden kann.

Vorteilhafterweise geben die Signalelemente optische, insbesondere sich zeitlich verändernde beziehungsweise blinkende, Signale ab. Zu diesem Zweck können Lichtquellen und insbesondere Lichtemitterdioden eingesetzt werden, die zuverlässig und kostengünstig sind und sich einfach von einer elektronischen Steuerung ansteuern lassen. Bei den üblicherweise unbeleuchteten Haushaltgeräten tritt eine derartige Signalisierung gut erkennbar hervor, und ist auch und gerade in dunkler Umgebung gut zu erkennen. Vorteilhafterweise wird ein blinkendes Lichtsignal verwendet, das optisch noch stärker hervortritt und durch die zeitliche Veränderung auch in stärkerem Maße Einstellung- beziehungsweise Betätigungsbedarf signalisiert.

Dabei ist es auch möglich, daß die Signalelemente fühlbare Signale abgeben, beispielsweise mittels mechanischer Stellglieder oder Vibrationsgeber. Diese Ausführungsform besitzt insbesondere für sehbehinderte oder blinde Bedienpersonen Vorteile.

Die Signalelemente können den Bedienelementen besonders sinnfällig durch Anordnung in deren Nähe zugeordnet werden, so daß keine weiteren Hinweise erforderlich sind, die möglicherweise die Gestaltung beeinträchtigen. In einer insbesondere gestalterisch vorteilhaften Ausführungsform sind die Signalelemente in den jeweils zugeordneten Bedienelementen integriert. Dazu können die Signalelemente in den Bedienelementen eingebaut sein oder ihre Signale durch Öffnungen in den Bedienelementen abgeben. Beispielsweise können die Bedienelemente mit Lichtemitterdioden versehen sein oder mit Lichtleitern, die das Licht einer entfernten Quelle durch eine Öffnung in dem Bedienelement abgeben, wobei in einem solchen Fall die Öffnung an die Stelle des Signalelements tritt. Eine derartige Ausführungsform mit integrierten Signalelementen ist platzsparend und ordnet die Signalelemente eindeutig den Bedienelementen zu.

Die erfindungsgemäße Lösung kann bei Backöfen, Kochmulden, Geschirrspülern oder Kühlgeräten angewendet werden.

Besonders vorteilhaft ist die Anwendung der Erfindung bei einer Wäschebehandlungsmaschine, wie Waschmaschine, Wäschetrockner oder Waschtrockner, da diese Geräte in der Regel umfangreiche Einstellungen und einen hohen Bedienaufwand erfordern. Im Fall einer Waschmaschine oder eines Waschtrockners können Bedienelementen zum Einschalten der Maschine und/oder zum Einstellen des Betriebsprogramms und/oder zum Starten des Betriebsprogramms und/oder zum Öffnen der Tür und/oder zum Einstellen einer Zusatzbetriebsprogrammfunktion und/oder zum Einstellen der Schleuderdrehzahl oder des Schleudermodus und/oder zum Einstellen der Temperatur und/oder zum Öffnen der Waschmitteleinspüleinrichtung wenigstens ein Signalelement zugeordnet ist. Damit wird eine durchgängige Bedienerführung in Bezug auf alle Bedienelemente erreicht, die während eines üblichen Bedienvorgangs zeitlich aufeinander folgend betätigt werden.

Weitere Einzelheiten, Merkmale und Vorteile der Erfindung ergeben sich aus der folgenden Beschreibung eines Ausführungsbeispiels unter Bezugnahme auf die Zeichnungen. Darin zeigen
- Fig. 1: eine perspektivische Ansicht eines mit einer erfindungsgemäßen Bedienvorrichtung ausgerüsteten Haushaltgeräts,
- Fig. 2: eine Vorderansicht einer Ausführungsform der erfindungsgemäßen Bedienvorrichtung.

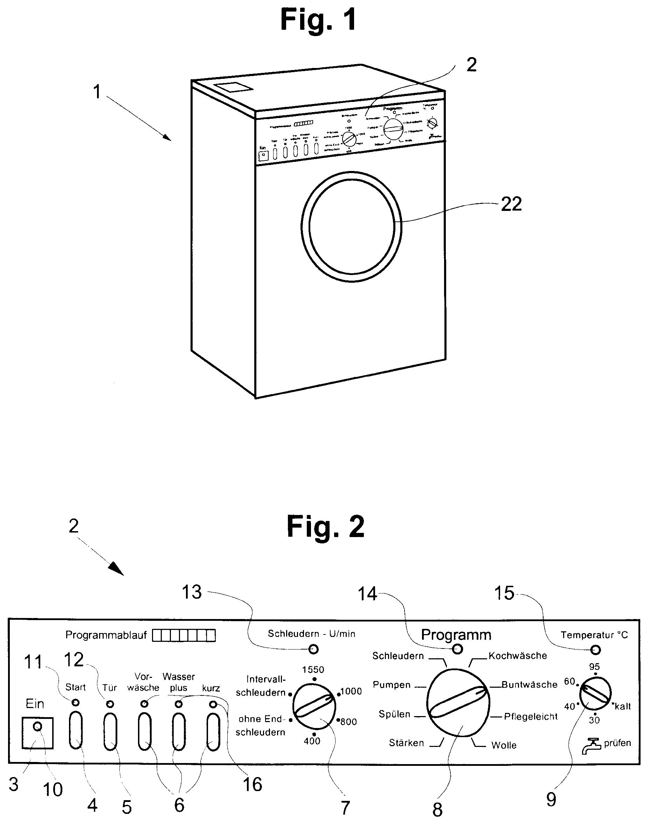

Fig. 1 zeigt in perspektivischer Ansicht als programmgesteuertes Haushaltgerät eine Waschmaschine 1, die in ihrer Frontfläche über einer Fülltür 22 zum Hineingeben der Wäsche eine erfindungsgemäß gestaltete Bedienvorrichtung 2 aufweist.

In Fig. 2 ist eine vergrößerte Vorderansicht der Bedienvorrichtung 2 dargestellt, auf der zahlreiche Bedienelemente 3 bis 9 angeordnet sind. Diese bedeuten von links nach rechts: Ein Hauptschalter 3 zum Einschalten der Waschmaschine 1, ein Druckschalter 4 zum Starten eines eingestellten Betriebsprogramms, ein Druckschalter 5 zum Öffnen der Fülltür, drei Druckschalter 6 zum Einstellen von Zusatzbetriebsprogrammfunktionen, ein Drehschalter 7 zum Einstellen des Schleudermodus, ein Drehschalter 8 zum Einstellen des Betriebsprogramms und ein Drehschalter 9 zum Einstellen der Behandlungstemperatur.

Mit den Druckschaltern 6 sind die Zusatzfunktionen "Vorwäsche" zum Vorschalten einer Vorwäsche vor den Hauptwaschgang, "Wasser plus" zum Waschen mit erhöhter Wassermenge und "kurz" zur zeitlichen Abkürzung des Waschvorgangs auswählbar, wobei die Auswahl einer Zusatzfunktion jedoch nicht unbedingt erforderlich ist. Die Zusatzfunktionen können gegebenenfalls auch in Kombination ausgewählt werden.

Mit dem Drehschalter 7 lassen sich verschiedene Schleuderdrehzahlen einstellen, sowie der Schleudermodus "Intervallschleudern" und eine Einstellung, in der die Wäsche nach dem Waschvorgang nicht geschleudert wird.

Das Betriebsprogramm wird mit dem Drehschalter 8 eingestellt und richtet sich insbesondere nach der Art der zu behandelnden Wäsche. Es können die Einstellungen "Kochwäsche", "Buntwäsche", "Pflegeleicht" und "Wolle" ausgewählt werden. Daneben sind die Sonderprogramme "Schleudern" zum Entfernen von Flüssigkeit aus der Wäsche, "Pumpen" zum Abpumpen von gegebenenfalls in dem Laugenbehälter befindlicher Flüssigkeit und die Programme "Spülen" und "Stärken" auswählbar, um die Wäsche mit klarem Wasser zu spülen beziehungsweise sie zu stärken.

Mit dem Drehschalter 9 kann die Behandlungstemperatur eingestellt werden.

Allen vorgenannten Bedienelementen 3 bis 9 ist jeweils ein Signalelement 10 bis 16 in Gestalt einer Lichtemitterdiode (LED) zugeordnet. Im Fall des Hauptschalters 3 ist die zugeordnete LED 10 im Schalter selbst integriert. Den übrigen Bedienelementen 4 bis 9 sind die Signalelemente 11 bis 16 durch die Anordnung in sehr geringem Abstand zugeordnet.

Bei ausgeschalteter Waschmaschine 1 leuchtet die LED 10 und signalisiert damit, daß für die Bedienung der Waschmaschine 1 als erstes der Hauptschalter 3 betätigt werden muß. Dies ergibt sich zwingend aus der Notwendigkeit, zuerst die Waschmaschine 1 einschalten zu müssen. Nach dem Einschalten erlischt die LED 10 und die LED 14 leuchtet auf, um die Bedienperson darauf hinzuweisen, daß zu Beginn die Einstellung des Betriebsprogramms mit dem Drehschalter 8 erforderlich ist. Nach erfolgter Einstellung des Betriebsprogramms erlischt die LED 14 und die LED 15 über dem Drehschalter 9 leuchtet auf, mit dem die Temperatur eingestellt werden soll. Dabei können abhängig von dem zuvor eingestellten Betriebsprogramm bestimmte Temperaturwerte unzulässig sein. Beispielsweise darf Wolle oder Buntwäsche nicht zu heiß gewaschen werden, so daß nach Auswahl von Wolle beispielsweise die zulässige Temperatur auf höchstens 40° Celsius beschränkt werden kann. Wird in einem solchen Fall eine unzulässig hohe Temperatur mit dem Drehschalter 9 eingestellt, so erlischt die zugeordnete LED 15 danach nicht. Sie signalisiert mit ihrem Weiterleuchten eine nicht zulässige Einstellung, die korrigiert werden muß. Denkbar ist auch, daß die LED 15 als zweifarbige LED ausgeführt ist und bei unzulässiger Temperaturwahl in einer anderen Farbe leuchtet. Folglich leuchtet die dem Drehschalter 7, mit dem im Regelfall im folgenden Bedienschritt der Schleudermodus eingestellt wird, zugeordnete LED 13 erst auf, wenn eine korrekte Temperaturwahl erfolgt ist.

Für die anschließende Einstellung des Schleudermodus können ebenfalls abhängig von zuvor erfolgten Einstellungen Einschränkungen gelten. Zum Beispiel kann bei Auswahl des Betriebsprogramms "Wolle" die maximale Schleuderdrehzahl auf 800 U/min begrenzt werden, wobei eine inkorrekte Schleuderdrehzahleinstellung von der entsprechenden LED 13 wie bei der Temperaturwahl signalisiert werden kann. Nach zulässiger Einstellung des Drehschalters 7 erlischt schließlich die LED 13.

Nach Einstellung des Schleudermodus beziehungsweise der Schleuderdrehzahl können mit den Drucktasten 6 eine oder mehrere Zusatzfunktionen ausgewählt werden. Dabei empfiehlt sich aber nicht jede Kombinationen in gleichem Maße. So läßt sich das Ziel eines kurzen Waschvorgangs durch Auswahl der Funktion "kurz" nur bedingt erreichen, z. B. wenn nicht gleichzeitig die Funktion "Vorwäsche" ausgewählt wurde. Für die Zweckmäßigkeit der Zusatzfunktionen können auch die übrigen Einstellungen des Betriebsprogramms und dessen Parameter wichtig sein. Zum Beispiel wird durch Einstellung einer niedrigen Waschtemperatur die Reinigungswirkung in der Regel ebenfalls veringert, so daß bei weiterer Verringerung der Reinigungswirkung durch Einstellung einer zeitlichen Verkürzung des Waschvorgangs unter Umständen ein zufriedenstellendes Waschergebnis nicht mehr erreicht werden kann. Auch kann es bei Einstellung eines Betriebsprogramms zum Waschen von empfindlicher Wäsche nachteilig sein, die Funktion "Vorwäsche" auszuwählen und damit das Gewebe oder Gestrick zusätzlich zu strapazieren.

Von den zugeordneten LEDs 16 leuchten nach zulässiger Betätigung des Drehschalters 7 nur diejenigen auf, mit deren zugeordneten Bedienelementen 6 sich entsprechend der zuvor vorgenommenen Einstellungen zulässige oder zweckmäßige Zusatzfunktionen auswählen lassen.

So können beispielsweise bei den Betriebsprogrammeinstellungen "Kochwäsche" oder "Buntwäsche" sämtliche LEDs 16 aktiviert werden und bei den Einstellung "Wolle" oder "Pflegeleicht" nur diejenigen zu den Zusatzfunktionen "Wasser plus" und "kurz". Nach Auswahl einer Zusatzfunktion erlischt erfindungsgemäß die zugeordnete LED 16, da bei dem entsprechenden Bedienelement 6 kein Einstellungsbedarf mehr besteht.

Zur Vermeidung von unzweckmäßigen Kombinationen von Zusatzfunktionen kann weiterhin vorgesehen sein, daß bei Auswahl einer Zusatzfunktion, die nicht zusammen mit einer anderen verwendet werden sollte, sowohl die LED der ausgewählten Zusatzfunktion als auch die der anderen erlischt.

Da die Auswahl einer Zusatzfunktionen nicht zwingend erforderlich ist und das Betriebsprogramm bereits nach der Einstellung des Schleudermodus gestartet werden könnte, beginnt gleichzeitig mit den LEDs 16 auch die LED 11 zu leuchten, die dem Druckschalter 4 zugeordnet ist. Das eingestellte Betriebsprogramm kann ohne Zusatzfunktionen bereits zu diesem Zeitpunkt mittels des Druckschalters 4 gestartet werden. In diesem Fall können die LEDs 16 erlöschen, da mit dem Start des Betriebsprogramms die Einstellung von Zusatzfunktionen von der Bedienperson in der Regel nicht mehr gewünscht ist.

Nach Beendigung des Behandlungsvorgangs leuchtet die LED 12 auf, die dem Türöffnungsschalter 5 zugeordnet ist, um der Bedienperson zu signalisieren, daß zur Entnahme der Wäsche dieses Bedienelement zu betätigen ist.

Durch die erfindungsgemäße Lösung wird somit eine Führung der Bedienperson durch den Bedienvorgang erreicht, wobei gleichzeitig deren Bedienhandlungen auf Zulässigkeit oder Zweckmäßigkeit überprüft werden können. Dabei können der Bedienperson durch die Signalisierung bereits gezielt zulässige beziehungsweise zweckmäßige Einstellungen angeboten beziehungsweise nahegelegt werden, so daß die Bedienperson bei ihren Entscheidungen nicht mehr alle Möglichkeiten in Betracht ziehen muß, wobei die bereits vorgenommenen Einstellungen berücksichtigt werden können. Die Bedienung wird somit einfacher, schneller und sicherer.

## Patentansprüche

1. Verfahren zum Bedienen eines programmgesteuerten Haushaltgeräts (1) mit Bedienelementen (3 bis 9), die während des Bedienvorgangs einzeln oder als eine Gruppe von Bedienelementen (6) zeitlich aufeinander folgend betätigt werden, **dadurch gekennzeichnet**, daß während des Bedienvorgangs das als nächstes zu betätigende Bedienelement (3 bis 9) oder die als nächstes zu betätigende Bedienelementgruppe (6) durch wenigstens ein zugeordnetes Signalelement (10 bis 16) signalisiert wird.

2. Verfahren nach Anspruch 1, dadurch gekennzeichnet, daß die Bedienelemente (6), die als Gruppe betätigt werden, abhängig von Einstellungen bestimmt werden, die mit den zuvor betätigten Bedienelementen (7, 8, 9) vorgenommenen wurden.

3. Verfahren nach Anspruch 1 oder 2, dadurch gekennzeichnet, daß von den Signalelementen (10 bis 16) signalisiert wird, ob die zugeordneten Bedienelemente (3 bis 9) auf zulässige beziehungsweise korrekte Weise betätigt beziehungsweise eingestellt wurden.

4. Verfahren nach einem der Ansprüche 1 bis 3, dadurch gekennzeichnet, daß nur die Betätigungen der Bedienelemente (3 bis 9) berücksichtigt werden, deren zugeordnete Signalelemente (10 bis 16) Signale abgeben.

5. Verfahren nach einem der Ansprüche 1 bis 4, dadurch gekennzeichnet, daß die Signalelemente (10 bis 16) optische, insbesondere sich zeitlich verändernde beziehungsweise blinkende, Signale abgeben.

6. Verfahren nach einem der Ansprüche 1 bis 4, dadurch gekennzeichnet, daß die Signalelemente (10 bis 16) fühlbare Signale abgeben.

7. Bedienvorrichtung (2) für ein programmgesteuertes Haushaltgerät zur Durchführung eines Verfahrens nach einem der Ansprüche 1 bis 6, mit wenigstens einem Bedienelement (3 bis 9), **dadurch gekennzeichnet**, daß wenigstens einem Bedienelement (3 bis 9) wenigstens ein Signalelement (10 bis 16) zugeordnet ist, das zum Signalisieren des als nächstes zu betätigenden Bedienelements (3 bis 9) oder der als nächstes zu betätigenden Bedienelementgruppe (6) dient.

8. Bedienvorrichtung nach Anspruch 7, dadurch gekennzeichnet, daß die Signalelemente (11 bis 16) in der Nähe der jeweils zugeordneten Bedienelemente (4 bis 9) angeordnet sind.

9. Bedienvorrichtung nach Anspruch 7, dadurch gekennzeichnet, daß die Signalelemente (10) in den jeweils zugeordneten Bedienelementen (3) integriert sind.

10. Bedienvorrichtung nach einem der Ansprüche 7 bis 9, dadurch gekennzeichnet, daß die optische Signale abgebenden Signalelemente (10 bis 16) Lichtemitterdioden sind.

11. Bedienvorrichtung nach einem der Ansprüche 7 bis 9, dadurch gekennzeichnet, daß die fühlbare Signale abgebenden Signalelemente mechanische Stellglieder oder Vibrationsgeber sind.

12. Bedienvorrichtung nach einem der Ansprüche 7 bis 11, dadurch gekennzeichnet, daß das programmgesteuerte Haushaltgerät (1) ein Backofen, eine Kochmulde, eine Geschirrspülmaschine oder eine Wäschebehandlungsmaschine, insbesondere eine Waschmaschine, ein Wäschetrockner oder ein Waschtrockner ist.

13. Bedienvorrichtung nach Anspruch 12 an einer Wäschebehandlungsmaschine, dadurch gekennzeichnet, daß Bedienelementen (3 bis 9) zum Einschalten der Wäschebehandlungsmaschine und/oder zum Starten des Betriebsprogramms und/oder zum Öffnen der Tür und/oder zum Einstellen wenigstens einer Zusatzbetriebsprogrammfunktion und/oder zum Einstellen der Schleuderdrehzahl oder des Schleudermodus und/oder zum Einstellen des Betriebsprogramms und/oder zum Einstellen der Temperatur und/oder zum Öffnen des Waschmittelbehälters jeweils ein Signalelement (10 bis 15) zugeordnet ist.
